# EUROPÄISCHE PATENTSCHRIFT

(11) **EP 2 079 997 B1**
(45) Veröffentlichungstag und Bekanntmachung des Hinweises auf die Patenterteilung: **28.07.2010**
(21) Anmeldenummer: 07821506.8
(22) Anmeldetag: 18.10.2007
(51) Int. Cl.: G01L 1/24, G01M 11/08

(54) **ANORDNUNG ZUR ÜBERWACHUNG EINES BEANSPRUCHTEN KÖRPERS UND VERFAHREN ZU DEREN HERSTELLUNG**
ARRANGEMENT FOR MONITORING A STRESSED BODY AND METHOD FOR THE PRODUCTION THEREOF
SYSTÈME DE SURVEILLANCE D'UN CORPS SOLLICITÉ ET SON PROCÉDÉ DE PRODUCTION

(30) Priorität: 19.10.2006 DE 102006049325
(43) Veröffentlichungstag der Anmeldung: 22.07.2009
(73) Patentinhaber: SIEMENS AKTIENGESELLSCHAFT, 80333 München (DE)
(72) Erfinder: BAUMANN, Ingolf, 01139 Dresden (DE); BOSSELMANN, Thomas, 91080 Marloffstein (DE)
(86) Internationale Anmeldenummer: PCT/EP2007/061141
(87) Internationale Veröffentlichungsnummer: WO 2008/046881

(56) Entgegenhaltungen:
- JP-A- 2006 242 743
- US-A- 5 745 611
- US-A1- 2003 127 587
- US-A1- 2006 045 408

## Beschreibung

Die Erfindung betrifft eine Anordnung zur Überwachung eines mechanisch stark beanspruchten Körpers sowie ein Verfahren zur Herstellung einer solchen Anordnung.

Eine derartige Anordnung ist beispielsweise aus der DE 102 38 862 A1 bekannt. Bei dem zu überwachenden Körper handelt es sich insbesondere um eine Turbinenschaufel eines elektrischen Generators. Je nach Leistungsklasse des Generators können an solchen Turbinenschaufeln sehr hohe mechanische und ggf. auch thermische Belastungen auftreten. Unter einer starken mechanischen Belastung sind hier Krafteinwirkungen von bis zu mehreren 1000 g zu verstehen. Bisweilen liegen die Kräfte sogar noch über diesen Werten. Unter einer starken thermischen Belastung sind hier Temperaturen von bis zu 800°C zu verstehen. Punktuell und vor allem an der Oberfläche können bei Turbinenschaufeln aber sogar Temperaturen von bis zu über 1000°C auftreten.

Bei der in der DE 102 38 862 A1 beschriebenen Überwachungsanordnung ist ein mit Bragg-Gitter-Sensoren versehener Lichtwellenleiter entweder direkt auf die Oberfläche der Turbinenschaufel aufgeklebt oder in nicht näher angegebener Weise in eine Ausnehmung an der Oberfläche eingebracht. Die Bragg-Gitter-Sensoren sind zur Dehnungs,- Schwingungs- oder Temperaturmessung bestimmt. Die Ausnehmungen haben relative große Abmessungen mit Öffnungsweiten von 0,2 mm bis 0,25 mm und Tiefen von 0,3 mm, so dass es bei hohen Belastungen der Turbinenschaufel zu Beeinträchtigungen der mechanischen Festigkeit kommen kann. Außerdem können bei extremen Belastungen Ablösungen der aufgeklebten Lichtwellenleiter auftreten.

Aus dem Fachaufsatz von S. Sandlin et al. "Evaluation of a new method for metal embedding of optical fibres for high temperature sensing purposes", VTT Symposium 212, BALTICA V, 2001, Vol. 2, S. 547 ff., ist ein Verfahren zur Einbettung eines Lichtwellenleiters in einen metallischen Körper mittels eines Lots bekannt. Auch hierbei werden relativ große Ausnehmungen in den Körper eingebracht. Außerdem wird ein mit Nickel beschichteter Lichtwellenleiter verwendet, der teuer und darüber hinaus auch nur in vergleichsweise kurzen Längen verfügbar ist. Das Einbettungsverfahren lässt sich somit nicht besonders gut für die Überwachung eines mechanisch stark beanspruchten Körpers, wie einer Turbinenschaufel, einsetzen.

Das Dokument US 2006/045408 offenbart eine Anordnung zur Überwachung eines mechanisch stark beanspruchten Körpers, wobei dieser Körper eine Oberfläche hat, die mindestens eine Nut aufweist, und wobei ein Lichtwellenleiter, der einen lichtführenden Kern und einen ihn umgebenden Mantel hat und in dem mindestens ein Sensor zur optischen Erfassung einer Messgröße vorgesehen ist, in die Nut eingelegt ist und der Lichtwellenleiter mittels mindestens eines Klebstoffs in einem an die Oberfläche angrenzenden Bereich einer der Nutseitenwände in der Nut lagefixiert ist. In dieser Vorrichtung, hat die Benützung eines Klebstoffs zur Folge die Instabilität der Konstruktion wegen hohen Temperaturen.

Um die Befestigung des Lichtwellenleiters in der Nut zu verwirklichen, offenbart das Dokument JP2006242743 eine Verschmelzung zwischen dem Material der Oberfläche und dem Schutzschicht der Faser. Diese Befestigung hat jedoch auch eine Grenztemperatur, um die herum die Konstruktion nicht stabil ist.

Eine Aufgabe der Erfindung besteht deshalb darin, eine Anordnung der eingangs bezeichneten Art anzugeben, die auch bei hoher mechanischer oder thermischer Belastung des zu überwachenden Körpers funktionsfähig bleibt.

Diese Aufgabe wird gelöst durch die Merkmale des unabhängigen Patentanspruchs 1. Bei der erfindungsgemäßen Anordnung handelt es sich um eine solche, bei der der Körper eine Oberfläche hat, die mindestens eine Nut mit zwei einander gegenüberliegenden und jeweils an die Oberfläche angrenzenden Nutseitenwänden aufweist, ein schutzbeschichtungsfreier Lichtwellenleiter, der einen lichtführenden Kern und einen ihn umgebenden Mantel hat und in dem mindestens ein Sensor zur optischen Erfassung einer Messgröße vorgesehen ist, in die Nut eingelegt ist und der Lichtwellenleiter mittels mindestens einer Verstemmung in einem an die Oberfläche angrenzenden Bereich einer der Nutseitenwände in der Nut lagefixiert ist.

Bei der erfindungsgemäßen Anordnung kommt ein vorzugsweise sensitiver, d.h. mit dem mindestens einem Sensor als integralem Bestandteil versehener Lichtwellenleiter (= LWL) zum Einsatz, bei dem die ansonsten stets vorhandene Schutzbeschichtung oder -ummantelung entfernt worden ist. Dadurch reduziert sich der Außendurchmesser auf bis zur Hälfte des Wertes eines schutzbeschichteten Lichtwellenleiters. Somit kann die an den Außendurchmesser des aufzunehmenden schutzbeschichtungsfreien Lichtwellenleiters angepasste Nut deutlich kleinere Abmessungen haben als bei den bekannten Ausführungsformen, bei denen Lichtwellenleiter mit Schutzbeschichtung in den zu überwachenden Körper eingebettet werden. Dadurch wird die insbesondere metallische Oberfläche des zu überwachenden Körper deutlich weniger in Mitleidenschaft gezogen. Auch bei sehr starken mechanischen Belastungen von insbesondere bis zu mehreren 1000 g bleibt die mechanische Stabilität der Gesamtanordnung so gewährleistet.

Darüber hinaus bietet die mechanische Verstemmung des insbesondere lose in die Nut eingelegten Lichtwellenleiters eine sehr gute Lagefixierung. Bei dieser Verstemmung handelt es sich vorzugsweise um eine Vorwölbung des Materials des zu überwachenden Körpers. Die Materialvorwölbung erstreckt sich dabei insbesondere von der betroffenen Nutseitenwand ausgehend oberhalb des eingelegten Lichtwellenleiters senkrecht zur Nutlängsrichtung in den Nutraum. Die Materialvorwölbung drückt im Wesentlichen punktförmig gegen den darunter liegenden Lichtwellenleiter und hält diesen so in der Nut fest. Dadurch werden eine sehr stabile und dauerhafte Fixierung des Lichtwellenleiters und eine Formstabilität der Einbettung erreicht, die vor allem auch bei hohen mechanischen und thermischen Belastungen erhalten bleiben.

Demgegenüber kann es bei den bekannten Ausführungsformen bei solchen Extrembelastungen aufgrund der unterschiedlichen Eigenschaften der beteiligten Materialien zu einer Lösung von Materialverbindungen kommen. Die beim Stand der Technik verwendeten Materialien haben teils ein sehr stark voneinander abweichendes thermisches Dehnungsverhalten und auch eine nicht ausreichende Langzeitstabilität. So kann sich z. B. die mittels eines Epoxyklebers gebildete Verbindung zwischen dem Lichtwellenleiter und dem zu überwachenden Körper mit der Zeit lösen. Außerdem kann die Verbindung zwischen dem Lichtwellenleiter-Glasmantel und der äußeren Kunststoff-Schutzbeschichtung verloren gehen, so dass sich der durch den Faserkern und den Fasermantel gebildete innere Lichtwellenleiterteil aus Glas innerhalb der äußeren Schutzbeschichtung bewegt. Dadurch können Messfehler resultieren.

Bei der erfindungsgemäßen mechanischen Verstemmung des schutzbeschichtungsfreien Lichtwellenleiters können diese Schwierigkeiten prinzipiell nicht auftreten. Es sind vorzugsweise nur zwei verschiedene Materialien beteiligt, nämlich das Material des zu überwachenden Körpers und das des schutzbeschichtungsfreien Lichtwellenleiters, also das des inneren Lichtwellenleiterteils. Zur Fixierung des Lichtwellenleiters dienen punktförmige Verstemmungen, die insbesondere aus dem Material des zu überwachenden Körpers bestehen. Die erfindungsgemäße Überwachungsanordnung kommt vorteilhafterweise ohne gesonderte Materialien für eine Klebe- oder Lotverbindung und für eine Schutzbeschichtung des Lichtwellenleiters aus. Thermische Belastungen von insbesondere bis zu etwa 800°C und starke mechanische Beanspruchungen haben somit keinen negativen Einfluss auf die mechanische Stabilität der Gesamtanordnung.

Insgesamt hat die erfindungsgemäße Überwachungsanordnung also eine deutlich verbesserte Funktionsfähigkeit und -sicherheit.

Vorteilhafte Ausgestaltungen der erfindungsgemäßen Anordnung ergeben sich aus den Merkmalen der von Anspruch 1 abhängigen Ansprüche.

Günstig ist eine Variante, bei der die Nut eine Öffnungsweite hat, die höchstens um 5 % bis 10 %, insbesondere um 1,5 % bis 8 %, größer ist als ein Außendurchmesser des Lichtwellenleiters. Aufgrund dieser engen Anpassung der Nut an den kleinen Außendurchmesser des schutzbeschichtungsfreien Lichtwellenleiters resultiert eine besonders geringe Beeinträchtigung der Oberfläche des zu überwachenden Körpers.

Weiterhin kann die Nut vorzugsweise einen V-förmigen oder U-förmigen Querschnitt aufweisen. Eine V-Nut bietet eine vorteilhafte 2-Punkt-Auflage. Bei einer U-Nut ist der U-Bogen-Radius bevorzugt in etwa an den LWL-Außenradius des schutzbeschichtungsfreien Lichtwellenleiters angepasst. Dadurch ergibt sich eine sehr gute und belastungsreduzierte Führung und Lagerung des schutzbeschichtungsfreien Lichtwellenleiters. Gegebenenfalls ist der U-Bogen-Radius geringfügig, beispielsweise um bis zu 2,5 % bis 5 %, größer als der LWL-Außenradius, um das Einlegen des Lichtwellenleiters zu erleichtern.

Gemäß einer anderen günstigen Variante weist die Nut im Bereich einer Messstelle, an der der Sensor innerhalb des in die Nut eingelegten Lichtwellenleiters angeordnet ist, keine Verstemmung in den Nutseitenwänden auf. Dadurch wird verhindert, dass die Verstemmung den insbesondere als Bragg-Gitter-Sensor ausgeführten Sensor beeinflusst und zu fehlerhaften Messergebnissen führt.

Dagegen ist es bei einer weiteren bevorzugten Ausgestaltung vorgesehen, dass die Nut unmittelbar vor oder unmittelbar nach einer Messstelle, an der der Sensor innerhalb des in die Nut eingelegten Lichtwellenleiters angeordnet ist, mindestens eine Verstemmung in den Nutseitenwänden aufweist. Grundsätzlich kann auch auf beiden Seiten des Sensors, also unmittelbar vor und unmittelbar nach der Messstelle, jeweils mindestens eine Verstemmung vorgesehen sein. Die Platzierung der Verstemmung an die Grenze zur Messstelle ermöglicht eine besonders exakte Lagefixierung des Sensors, so dass Messfehler z. B. aufgrund geringer lokaler Verschiebungen der Messstelle ausgeschlossen sind.

Vorzugsweise sind weiterhin mehrere Verstemmungen vorgesehen, die in einer Längsrichtung der Nut mit einem Abstand von einigen wenigen cm, insbesondere von 2 bis 3 cm, voneinander getrennt angeordnet sind. Dadurch ergibt sich eine besonders gute und dauerhafte Lagefixierung des eingelegten Lichtwellenleiters, die auch größten mechanischen Belastungen standhält.

Außerdem ist es ebenfalls hinsichtlich einer möglichst guten Fixierung des Lichtwellenleiters vorteilhaft, wenn mehrere Verstemmungen vorgesehen und an beiden Nutseitenwänden angeordnet sind. Eine beidseitige Fixierung mittels der Verstemmungen ist besonders sicher. Vorzugsweise kann dann außerdem eine der in der einen Nutseitenwand vorgesehenen Verstemmungen insbesondere genau einer der in der anderen Nutseitenwand vorgesehenen Verstemmungen gegenüberliegen. Dadurch können der Grad der Vorwölbung der einzelnen Verstemmungen und damit der auf den Lichtwellenleiter an der jeweiligen Stelle ausgeübte Druck reduziert werden. Darüber hinaus lässt sich eine kleinere Vorwölbung in dem üblicherweise sehr harten Oberflächenmaterial des zu überwachenden Körpers einfacher herstellen. Die erforderliche Fixierung des Lichtwellenleiters ist dann aber trotzdem aufgrund der sich einander gegenüberliegenden Vorwölbungen an beiden Nutseitenwänden gegeben. Grundsätzlich können die an den beiden Nutseitenwänden vorgesehenen Verstemmungen aber auch gegeneinander versetzt angeordnet werden.

Eine weitere Aufgabe der Erfindung besteht darin, ein Verfahren anzugeben, mit dem eine auch bei hoher mechanischer oder thermischer Belastung des zu überwachenden Körpers funktionsfähige Anordnung hergestellt werden kann.

Diese Aufgabe wird gelöst durch die Merkmale des Patentanspruchs 9. Bei dem erfindungsgemäßen Herstellungsverfahren handelt es sich um ein solches, bei dem eine Nut mit zwei einander gegenüberliegenden Nutseitenwänden in eine Oberfläche eines zu überwachenden Körpers eingebracht wird, von einem mit mindestens einem Sensor zur optischen Erfassung einer Messgröße versehenen Lichtwellenleiter eine äußere Schutzbeschichtung entfernt wird, so dass ein lichtführender Kern und ein ihn umgebender Mantel übrig bleiben, der schutzbeschichtungsfreie Lichtwellenleiter lose in die Nut eingelegt wird und mindestens eine der Nutseitenwände in einem an die Oberfläche angrenzenden Bereich verstemmt wird, so dass der in die Nut eingelegte Lichtwellenleiter lagefixiert wird. Anhand des erfindungsgemäßen Verfahrens lässt sich eine erfindungsgemäße Überwachungsanordnung besonders einfach herstellen. Zum Entfernen der üblicherweise aus einem Kunststoff, beispielsweise aus Acrylat, bestehenden Schutzbeschichtung wird der schutzbeschichtete Lichtwellenleiter in ein Lösungsmittel, beispielsweise in eine Aceton-Lösung, gelegt. Das Aceton wirkt auf den Kunststoff der Schutzumhüllung ein, ohne den inneren insbesondere aus Glas bestehenden Lichtwellenleiterteil (= Glaskern und Glasmantel) anzugreifen. Die so behandelte Kunststoff-Schutzbeschichtung kann dann problemlos vom inneren Lichtwellenleiterteil abgestreift werden.

Weitere Merkmale, Vorteile und Einzelheiten der Erfindung ergeben sich aus der nachfolgenden Beschreibung von Ausführungsbeispielen anhand der Zeichnung. Es zeigt:
- FIG 1: ein Ausführungsbeispiel einer Überwachungsanordnung mit einem schutzbeschichtungsbefreiten Lichtwellenlei- ter, der in eine Nut an der Oberfläche eines Körpers eingelegt und mittels Verstemmungen gesichert ist,
- FIG 2: einen Aufbau eines schutzbeschichteten Lichtwellenlei- ters,
- FIG 3: ein Ausführungsbeispiel einer Überwachungsanordnung mit einer V-förmigen Nut zur Aufnahme eines Lichtwel- lenleiters in teilmontiertem Zustand,
- FIG 4: ein Ausführungsbeispiel einer Überwachungsanordnung mit einer U-förmigen Nut zur Aufnahme eines Lichtwel- lenleiters in teilmontiertem Zustand,
- FIG 5: die Überwachungsanordnung gemäß FIG 3 mit Verstemmun- gen an den Nutseitenwänden oberhalb des in die Nut eingelegten Lichtwellenleiters und
- FIG 6: die Überwachungsanordnung gemäß FIG 4 mit Verstemmun- gen an den Nutseitenwänden oberhalb des in die Nut eingelegten Lichtwellenleiters.

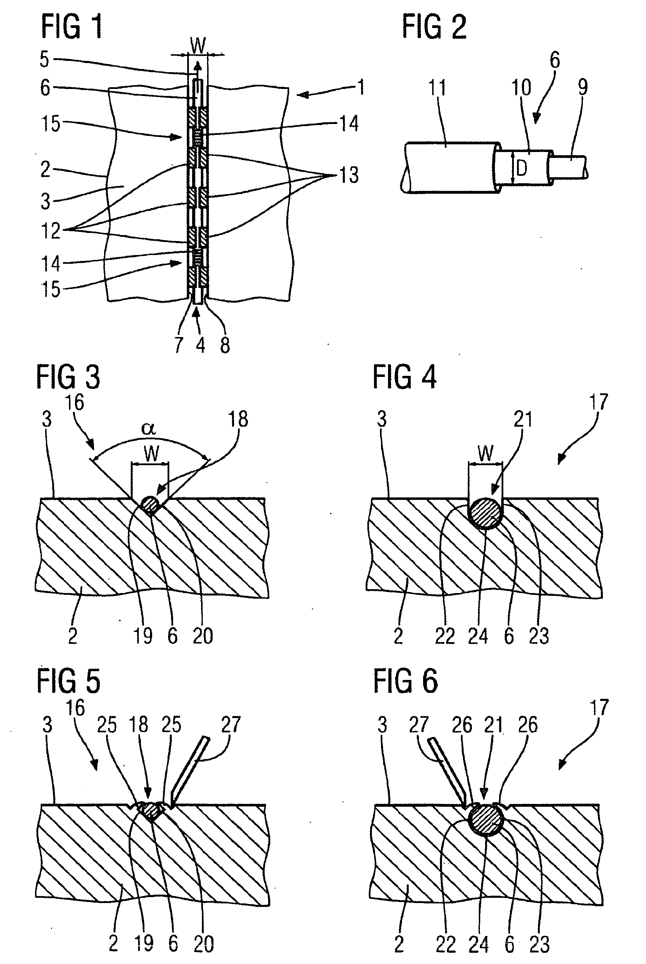

Einander entsprechende Teile sind in FIG 1 bis 6 mit denselben Bezugszeichen versehen.

In FIG 1 ist ein Ausführungsbeispiel einer Überwachungsanordnung 1 gezeigt. Sie dient zur Überwachung eines mechanisch und thermisch stark beanspruchten Körpers, der im Ausführungsbeispiel als Turbinenschaufel 2 ausgebildet ist. An einer Oberfläche 3 der Turbinenschaufel 2 ist eine Nut 4 mit einer Nutlängsrichtung 5 und einer oberen Öffnungsweite W vorgesehen. Die Nut 4 hat zwei Nutseitenwände 7 und 8, die sich von der Oberfläche 3 in Richtung eines in FIG 1 nicht sichtbaren Nutbodens wegerstrecken. Außer der beispielhaft gezeigten Nut 4 können an der Oberfläche 3 weitere ähnliche Nuten vorgesehen sein. In die Nut 4 ist ein Lichtwellenleiter 6 lose eingelegt. Der Lichtwellenleiter 6 ist schutzbeschichtungsfrei.

In FIG 2 ist der Lichtwellenleiter 6 noch vor seiner Einbettung in die Turbinenschaufel 2 gezeigt. Er hat einen lichtführenden Kern 9 (engl. Fachbegriff: core), einen den Kern 9 umgebenden Mantel 10 (engl. Fachbegriff: cladding) und eine äußere - ggf. mehrschichtige - Schutzbeschichtung 11 (engl. Fachbegriff: coating). Der innere Lichtwellenleiterteil ist durch den Kern 9 und den Mantel 10 gebildet. Sie bestehen im Ausführungsbeispiel aus Glas. Es handelt sich um einen Glasfaser-Lichtwellenleiter. Der Mantel 10 hat eine niedrigere optische Brechzahl als der Kern 9, so dass sich im Kern 9 ausbreitendes Licht am Mantel 10 total reflektiert und somit im Kern 9 geführt wird.

Der innere Lichtwellenleiterteil hat einen Außendurchmesser D, der im Ausführungsbeispiel 125 µm beträgt. Mit der äußeren beispielsweise aus Kunststoff bestehenden Schutzbeschichtung 11 liegt ein Gesamtaußendurchmesser von etwa 250 µm vor.

Vor der Einbettung in die Turbinenschaufel 2 wird die äußere Schutzbeschichtung 11 entfernt, womit sich die Außenabmessungen auf den Außendurchmesser D reduzieren. Die Abmessungen der Nut 4, wie beispielsweise ihre Öffnungsweite W und auch eine nicht näher bezeichnete Nuttiefe, sind an den Außendurchmesser D angepasst. Im Ausführungsbeispiel von FIG 1 ist die Öffnungsweite W um etwa 2 µm bis 5 µm größer als der Auβendurchmesser D.

Der in der Nut 4 liegende Lichtwellenleiter 6 ist mittels mehrerer Verstemmungen 12 und 13 an den beiden Nutseitenwänden 7 bzw. 8 lagefixiert. Die Verstemmungen 13 sind Vorwölbungen des Materials der Turbinenschaufel 2, die sich oberhalb des Lichtwellenleiters 6 senkrecht zur Nutlängsrichtung 5 in den Bereich der Nut 4 erstrecken. Jeweils eine der Verstemmungen 12 der Nutseitenwand 7 liegt einer der Verstemmungen 13 der Nutseitenwand 8 gegenüber. In der Nutlängsrichtung 5 sind die Stellen, an denen jeweils ein Paar mit beidseitigen Verstemmungen 12 und 13 vorgesehen ist, in etwa 2 cm bis 3 cm voneinander beabstandet.

Der Lichtwellenleiter 6 weist mehrere Bragg-Gitter-Sensoren 14 auf, die jeweils zur Detektion einer an einer zugehörigen Messstelle 15 der zu überwachenden Turbinenschaufel 2 vorliegenden Messgröße bestimmt sind. Bei den Messgrößen kann es sich beispielsweise um eine Dehnung, eine mechanische Schwingung oder eine Temperatur handeln. Unmittelbar angrenzend an die Messstellen 15 und jeweils auf beiden Längsseiten der Messstellen 15 sind Paare mit beidseitigen Verstemmungen 12 und 13 vorgesehen. Dadurch ist der Lichtwellenleiter 4 in den Bereichen, an denen er Bragg-Gitter-Sensoren 14 hat, besonders gut in seiner Position fixiert. Die einzelnen Bragg-Gitter-Sensoren 14 und damit die Messstellen 15 können grundsätzlich in beliebigen Abstand zueinander angeordnet sein. Die jeweilige Position wird durch die Messaufgabe bestimmt.

In FIG 3 und 5 bzw. 4 und 6 sind weitere Ausführungsbeispiele von Überwachungsanordnungen 16 bzw. 17 für die Turbinenschaufel 2 jeweils in Querschnittsdarstellungen gezeigt.

Die Überwachungsanordnung 16 gemäß Fig. 3 und 5 hat eine V-Nut 18 mit Nutseitenwänden 19 und 20. Der eingebettete Lichtwellenleiter 6 liegt an zwei Kontaktlinien an, die in der Querschnittsdarstellung gemäß FIG 3 und 5 als zwei Kontaktpunkte erscheinen und die im Wesentlichen in der Nutlängsrichtung 5 an den beiden Nutenseitenwänden 19 und 20 verlaufen. Ein durch die beiden Nutenseitenwänden 19 und 20 gebildeter Öffnungswinkel α wird so gewählt, dass einerseits eine gute Auflage des Lichtwellenleiters 6 gewährleistet ist und andererseits die Öffnungsweite W gering ist. Der Öffnungswinkel α beträgt zwischen 45° und 120°, vorzugsweise liegt er bei 90°±10°.

Die Überwachungsanordnung 17 gemäß Fig. 4 und 6 hat eine U-Nut 21 mit Nutseitenwänden 22 und 23 und einem runden U-Boden 24, auf dem der Lichtwellenleiter 6 aufliegt. Sein Krümmungsradius ist geringfügig größer als der des Außenumfangs des Lichtwellenleiters 6.

Auch die V-Nut 18 und die U-Nut 21 sind wie die Nut 4 der Überwachungsanordnung 1 gemäß FIG 1 in ihren jeweiligen Nutabmessungen an den aufzunehmenden schutzbeschichtungsfreien Lichtwellenleiter 6 angepasst. Es ist jeweils nur ein geringes Spiel in der Größenordnung von bis zu 5 µm vorgesehen, um den Lichtwellenleiter 6 leicht einlegen zu können.

Nachdem der Lichtwellenleiter 6 lose in die jeweilige V- oder U- Nut 18 bzw. 21 eingelegt ist (siehe die in FIG 3 und 4 gezeigten teilmontierten Zustände), werden im oberen, d.h. im an die Oberfläche 3 angrenzenden Bereich der Nutseitenwände 19 und 20 bzw. 22 und 23 Verstemmungen 25 bzw. 26 z. B. mittels eines stichelartigen Stemmwerkzeugs 27 erzeugt. Das Material der Turbinenschaufel 2 legt sich dabei teilweise über den Lichtwellenleiter 6 und hält diesen so in der V- oder U- Nut 18 bzw. 19 fest (siehe Darstellungen gemäß FIG 5 und 6).

## Patentansprüche

1. Anordnung zur Überwachung eines mechanisch oder thermisch stark beanspruchten Körpers (2), wobei
a) der Körper (2) eine Oberfläche (3) hat, die mindestens eine Nut (4; 18; 21) mit zwei einander gegenüberliegenden und jeweils an die Oberfläche (3) angrenzenden Nutseitenwänden (7, 8; 19, 20; 22, 23) aufweist,
b) ein Lichtwellenleiter (6), der einen lichtführenden Kern (9) und einen ihn umgebenden Mantel (10) hat und in dem mindestens ein Sensor (14) zur optischen Erfassung einer Messgröße vorgesehen ist, in die Nut (4; 18; 21) eingelegt ist,
**dadurch gekennzeichnet, dass**
c) der Lichtwellenleiter schutzbeschichtungsfrei ist, und
d) der Lichtwellenleiter (6) mittels mindestens einer Verstemmung (12, 13; 25; 26) in einem an die Oberfläche (3) angrenzenden Bereich einer der Nutseitenwände (7, 8; 19, 20; 22, 23) in der Nut (4; 18; 21) lagefixiert ist.

2. Anordnung nach Anspruch 1, **dadurch gekennzeichnet, dass** die Nut (4; 18; 21) eine Öffnungsweite (W) hat, die höchstens um 5 % bis 10 % größer ist als ein Außendurchmesser (D) des Lichtwellenleiters (6).

3. Anordnung nach Anspruch 1, **dadurch gekennzeichnet, dass** die Nut (18; 21) einen V-förmigen oder U-förmigen Querschnitt aufweist.

4. Anordnung nach Anspruch 1, **dadurch gekennzeichnet, dass** die Nut (4; 18; 21) im Bereich einer Messstelle (15), an der der Sensor (14) innerhalb des in die Nut (4; 18; 21) eingelegten Lichtwellenleiters (6) angeordnet ist, keine Verstemmung in den Nutseitenwänden (7, 8; 19, 20; 22, 23) aufweist.

5. Anordnung nach Anspruch 1, **dadurch gekennzeichnet, dass** die Nut (4; 18; 21) unmittelbar vor oder unmittelbar nach einer Messstelle (15), an der der Sensor (14) innerhalb des in die Nut (4; 18; 21) eingelegten Lichtwellenleiters (6) angeordnet ist, mindestens eine Verstemmung (12, 13; 25; 26) in den Nutseitenwänden (7, 8; 19, 20; 22, 23) aufweist.

6. Anordnung nach Anspruch 1, **dadurch gekennzeichnet, dass** mehrere Verstemmungen (12, 13; 25; 26) vorgesehen sind, die in einer Längsrichtung (5) der Nut (4; 18; 21) mit einem Abstand von einigen wenigen cm, insbesondere von 2 bis 3 cm, voneinander getrennt angeordnet sind.

7. Anordnung nach Anspruch 1, **dadurch gekennzeichnet, dass** mehrere Verstemmungen (12, 13; 25; 26) vorgesehen sind, die an beiden Nutseitenwänden (7, 8; 19, 20; 22, 23) angeordnet sind.

8. Anordnung nach Anspruch 7, **dadurch gekennzeichnet, dass** einer der Verstemmungen (12; 25; 26) in der einen Nutseitenwand (7; 19; 22) eine der Verstemmungen (13; 25; 26) in der anderen Nutseitenwand (8; 20; 23) gegenüberliegt.

9. Verfahren zur Herstellung einer Anordnung (1; 16; 17) nach einem der vorhergehenden Ansprüche, bei dem
a) eine Nut (4; 18; 21) mit zwei einander gegenüberliegenden Nutseitenwänden (7, 8; 19, 20; 22, 23) in eine Oberfläche (3) eines zu überwachenden Körpers (2) eingebracht wird,
b) von einem mit mindestens einem Sensor (14) zur optischen Erfassung einer Messgröße versehenen Lichtwellenleiter (6) eine äußere Schutzbeschichtung (11) entfernt wird, so dass ein lichtführender Kern (9) und ein ihn umgebender Mantel (10) übrig bleiben,
c) der schutzbeschichtungsfreie Lichtwellenleiter (6) lose in die Nut (4; 18; 21) eingelegt wird und
d) mindestens eine der Nutseitenwände (7, 8; 19, 20; 22, 23) in einem an die Oberfläche (3) angrenzenden Bereich verstemmt wird, so dass der in die Nut (4; 18; 21) eingelegte Lichtwellenleiter (6) lagefixiert wird.

## Claims

1. Arrangement for monitoring a mechanically or thermally strongly stressed body (2), in which
a) the body (2) has a surface (3) that has at least one groove (4; 18; 21) with two groove lateral walls (7, 8; 19, 20; 22, 23) that are situated opposite one another and are respectively adjacent to the surface (3), and
b) an optical waveguide (6) that has a light-guiding core (9) and a cladding (10) surrounding it and in which there is provided at least one sensor (14) for optically detecting a measured variable is inserted into the groove (4; 18; 21),
**characterized in that**
c) the optical waveguide is without protective coating, and
d) the optical waveguide (6) is fixed in place in the groove (4; 18; 21) by means of at least one calking (12, 13; 25; 26) in a region, adjacent to the surface (3), of one of the groove lateral walls (7, 8; 19, 20; 22, 23).

2. Arrangement according to Claim 1, **characterized in that** the groove (4; 18; 21) has an opening width (W) that is larger by at most 5% to 10% than an outside diameter (D) of the optical waveguide (6).

3. Arrangement according to Claim 1, **characterized in that** the groove (18; 21) has a V-shaped or U-shaped cross section.

4. Arrangement according to claim 1, **characterized in that** the groove (4; 18; 21) has no calking in the groove lateral walls (7, 8; 19, 20; 22, 23) in the region of a measuring point (15) at which the sensor (14) is arranged inside the optical waveguide (6) inserted into the groove (4; 18; 21).

5. Arrangement according to claim 1, **characterized in that** the groove (4; 18; 21) has at least one calking (12, 13; 25; 26) in the groove lateral walls (7, 8; 19, 20; 22, 23) immediately before or immediately after a measuring point (15) at which the sensor (14) is arranged inside the optical waveguide (6) inserted into the groove (4; 18; 21).

6. Arrangement according to Claim 1, **characterized in that** a plurality of calkings (12, 13; 25; 26) are provided that are arranged separated from one another in a longitudinal direction (5) of the groove (4; 18; 21) at a spacing of a few cm, in particular of from 2 to 3 cm.

7. Arrangement according to Claim 1, **characterized in that** a plurality of calkings (12, 13; 25; 26) are provided that are arranged on both groove lateral walls (7, 8; 19, 20; 22, 23).

8. Arrangement according to Claim 7, **characterized in that** one of the calkings (12; 25; 26) in one groove lateral wall (7; 19; 22) is situated opposite one of the calkings (13; 25; 26) in the other groove lateral wall (8; 20; 23).

9. Method for the production of an arrangement (1; 16; 17) according to one of the preceding claims, in the case of which
a) a groove (4; 18; 21) with two groove lateral walls (7, 8; 19, 20; 22, 23) that are situated opposite one another is introduced into a surface (3) of a body (2) to be monitored,
b) an outer protective coating (11) is removed from an optical waveguide (6) provided with at least one sensor (14) for optically detecting a measured variable, such that a light guiding core (9) and a cladding (10) surrounding it are left over,
c) the optical waveguide (6) without protective coating is inserted loosely into the groove (4; 18; 21) and
d) at least one of the groove lateral walls (7, 8; 19, 20; 22, 23) is calked in a region adjacent to the surface (3) such that the optical waveguide (6) inserted into the groove (4; 18; 21) is fixed in place.

## Revendications

1. Dispositif de contrôle d'un corps ( 2 ) soumis à une forte contrainte mécanique ou thermique, dans lequel
a) le corps ( 2 ) a une surface ( 3 ) qui a au moins une rainure ( 4; 18 ; 21 ) ayant deux parois ( 7, 8 ; 19, 20 ; 22, 23 ) latérales opposées mutuellement et voisines respectivement de la surface ( 3 ),
b) un guide ( 6 ) d'onde lumineuse, qui a une âme ( 9 ) conduisant la lumière et une gaine ( 10 ) qui l'entoure et dans lequel est prévu au moins un capteur ( 14 ) de détection optique d'une grandeur de mesure, est mis dans la rainure ( 4; 18 ; 21 ),
**caractérisé en ce que**
c) le guide d'onde lumineuse est exempt de couche de protection, et
d) le guide ( 6 ) d'onde lumineuse est immobilisé en position dans la rainure ( 4 ; 18; 21 ) au moyen d'au moins un matage ( 12, 13 ; 25 ; 26 ) dans une partie, voisine de la surface ( 3 ) , des parois ( 7, 8 ; 19, 20 ; 22, 23 ) latérales de la rainure.

2. Dispositif suivant la revendication 1, **caractérisé en ce que** la rainure ( 4, ; 18 ; 21 ) a une largeur ( W ) d'ouverture qui est plus grande au plus de 5 % à 10 % qu'un diamètre ( D ) extérieur du guide ( 6 ) d'onde lumineuse.

3. Dispositif suivant la revendication 1, **caractérisé en ce que** la rainure ( 18 ; 21 ) a une section transversale en forme de V ou en forme de U.

4. Dispositif suivant la revendication 1, **caractérisé en ce que** la rainure ( 4 ; 18 ; 21 ) n'a pas dans la partie d'un point ( 15 ) de mesure, où le capteur ( 14 ) est disposé à l'intérieur du guide ( 6 ) d'onde lumineuse mis dans la rainure ( 4 ; 18; 21 ), de matage dans les parois ( 7, 8 ; 19, 20 ; 22, 23 ) latérales de la rainure.

5. Dispositif suivant la revendication 1, **caractérisé en ce que** la rainure ( 4 ; 18 ; 21 ) a juste avant ou juste après un point ( 15 ) de mesure, où le capteur ( 14 ) est disposé dans le guide ( 6 ) d'onde lumineuse mis dans la rainure ( 4 ; 18; 21 ), au moins un matage ( 12, 13 ; 25 ; 26 ) dans les parois ( 7, 8 ; 19, 20 ; 22, 23 ) latérales de la rainure.

6. Dispositif suivant la revendication 1, **caractérisé en ce qu'**il est prévu plusieurs matages ( 12, 13 ; 25 ; 26 ) qui sont disposés en étant séparés les uns des autres dans la direction ( 5 ) longitudinale de la rainure ( 4 ; 18 ; 21 ) à un intervalle de quelques centimètres, notamment de 2 à 3 cm.

7. Dispositif suivant la revendication 1, **caractérisé en ce qu'**il est prévu plusieurs matages ( 12, 13 ; 25 ; 26 ) qui sont disposés sur les deux parois ( 7, 8 ; 19, 20 ; 22, 23 ) latérales de la rainure.

8. Dispositif suivant la revendication 7, **caractérisé en ce que** l'un des matages ( 12 ; 25 ; 26 ) dans l'une des parois ( 7, 8 ; 19 ; 22 ) latérales de la rainure est opposée à l'un des matages ( 13 ; 25 ; 26 ) de l'autre paroi ( 8 ; 20 ; 23 ) latérale de la rainure.

9. Procédé de fabrication d'un dispositif ( 1 ; 16 ; 17 ) suivant l'une des revendications précédentes, dans lequel
a) on ménage une rainure ( 4 ; 18 ; 21 ) ayant deux parois ( 7, 8 ; 19, 20 ; 22, 23 ) latérales opposées l'une à l'autre dans une surface ( 3 ) d'un corps ( 2 ) à contrôler,
b) on élimine un revêtement ( 11 ) extérieur de protection d'un guide ( 6 ) d'onde lumineuse, muni d'au moins un capteur ( 14 ) de détection ( 6 ) d'une grandeur de mesure, de manière à laisser subsister une âme ( 9 ) conduisant la lumière et une gaine ( 10 ) qui l'entoure,
c) on met le guide ( 6 ) d'onde lumineuse exempt de revêtement de protection d'une manière lâche dans la rainure ( 4 ; 18 ; 21 ), et
d) on mate au moins l'une des parois ( 7, 8 ; 19, 20 ; 22, 23 ) latérales de la rainure dans une partie voisine de la surface ( 3 ) de manière à immobiliser en position le guide ( 6 ) d'onde lumineuse mis dans la rainure ( 4 ; 18 ; 21 ).
